(19)

Europäisches
Patentamt
European
Patent Office
Office européen
des brevets

(11) **EP 4 768 387 A1**

(12) **EUROPEAN PATENT APPLICATION**

(43) Date of publication:
**01.07.2026 Bulletin 2026/27**

(21) Application number: **24425068.4**

(22) Date of filing: **31.12.2024**

(51) International Patent Classification (IPC):
**B64C 11/30** (2006.01)        **B64D 45/00** (2006.01)
**B64C 27/78** (2006.01)        **B64C 27/82** (2006.01)

(52) Cooperative Patent Classification (CPC):
**B64C 11/301; B64C 27/78; B64D 45/0005;**
B64C 2027/8209

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Leonardo S.p.a.**
**00195 Roma (IT)**

(72) Inventors:
• **Novembrini, Giovanni**
**21017 SAMARATE (VA) (IT)**
• **Delli Paoli, Michele**
**21017 SAMARATE (VA) (IT)**

• **Zaccaria, Alessio**
**21017 SAMARATE (VA) (IT)**
• **Manenti, Giuseppe**
**21017 SAMARATE (VA) (IT)**
• **Brunetti, Massimo**
**21017 SAMARATE (VA) (IT)**
• **Nesci, Andrea**
**21017 SAMARATE (VA) (IT)**

(74) Representative: **Studio Torta S.p.A.**
**Via Viotti, 9**
**10121 Torino (IT)**

Remarks:
Amended claims in accordance with Rule 137(2)
EPC.

(54) **METHOD OF ESTIMATING THE PITCH ANGLE OF A ROTOR BLADE FOR AN AIRCRAFT, AND ROTOR FOR AN AIRCRAFT**

(57)     A method is described for estimating the pitch angle ($\gamma$) of the blades (25) of a rotor (10, 10') of an aircraft (1) capable of hovering comprising a motor member (16) with a stator (14) and an output shaft (18) rotatable about the stator (14); a hub (19) rotatable about the axis (B) and operatively connected with the output shaft (18) so as to be rotatable with an angular velocity ($\omega$) about the axis (B); at least two blades (25) rotatable about the axis (B) and about corresponding second axes (D) of extension of the blades (25), so as to adjust the pitch angles ($\gamma$) of the blades (25) between a first value ($\alpha$) and a second value ($\beta$) different from each other; the method comprises the steps of: i) computing a third value associated with the torque ($\tau_{EM}$) generated by the motor (16); ii) computing a fourth value associated with the torque ($\tau_{tr}$) required, in use, by the rotor (10, 10'); iii) computing a fifth value associated with the thrust coefficient ($C_P$) and a sixth value associated with the thrust coefficient ($C_T$) of the rotor (10, 10'), also based on the fourth value; iv) comparing the fifth and sixth values with seventh and eighth threshold values ($Th_P$, $Th_T$); and v) estimating a ninth value of the pitch angle ($\gamma$), based on the result of step iv). (Figure 2)

FIG. 2

# EP 4 768 387 A1

**Description**

The present invention relates to a method for estimating the pitch angle of a rotor blade for an aircraft, in particular an anti-torque rotor for a helicopter.

The present invention also relates to a rotor for an aircraft, in particular an anti-torque rotor for a helicopter.

Helicopters are known comprising:

- a fuselage;
- a main rotor adapted to generate the necessary lift to support and manoeuvre the helicopter itself, and generating, following the operation thereof, a reaction torque on the fuselage; and
- an anti-torque rotor adapted to generate a thrust and, thus, a counter torque that balances the reaction torque generated on the fuselage by the main rotor.

In traditional solutions, helicopters comprise one or more turbines operatively connected to the main rotor via a drive unit.

The anti-torque rotor comprises, in a known way:

- a drive shaft rotated about a first axis by a gear chain of the transmission unit;
- a plurality of articulated blades with variable pitch angles on the drive shaft; and
- a drive device that can be operated to vary the pitch angle of the aforementioned blades and consequently adjust the thrust value generated by the rotor itself.

In known solutions, the drive device essentially comprises:

- a rod sliding along the first axis of the drive shaft with respect to the drive shaft and rotatable about said first axis integrally with the drive shaft and blades;
- a ring integral with the drive rod and axially spaced from the hub; and
- a plurality of levers hinged, at respective mutually opposite ends, to the ring and to respective blades eccentric to second longitudinal extension axes of the respective blades.

In a nutshell, the sliding of the rod varies the inclination of the levers with respect to the corresponding second axes and consequently adjusts the pitch angles of the corresponding blades.

Recently, anti-torque systems consisting of a plurality of electrically driven rotors have been introduced, e.g. by patent application EP-A-3501983 on behalf of the Applicant.

In more detail, the drive shaft of each of the aforementioned rotors is operated by a respective electric motor with a rotation speed that can be selectively adjusted independently of the operating conditions of the main rotor.

In order to simplify the construction of the rotor, the blades are mounted on their respective drive shafts with fixed pitch angles, so that a connecting member is not required.

Consequently, the reaction torque rate generated by each rotor can only be adjusted by acting on the rotational speed of the related drive shaft.

In order to overcome this drawback, European patent application 23220515.3 in the name of the same Applicant describes an electrically operated anti-torque rotor for a helicopter configured in such a way that the respective blades can only assume a discrete number, e.g. two, of different pitch angles.

This adjustment of the thrust and, therefore, of the counter torque generated by such a rotor is carried out by continuously adjusting the rotation speed and discretely adjusting the pitch angle.

In more detail, the anti-torque rotor comprises:

- a hub connected to the output shaft of the electric motor;
- a pair of connecting members connected with respective blades and operable to adjust the corresponding pitch angles;
- a drive element connected with the connecting members and rotating about a respective axis; and
- constraint means adapted to constrain the hub and the drive element.

The constraint means are configured to keep the drive element and the hub angularly integral with each other in a first or second relative position between them, when the absolute value of the acceleration of the drive element is respectively lower or higher than a threshold value, so that the pitch angles take on different first or second values respectively.

The constraint means also allow relative rotation between the drive element and the hub between the first and second position when the absolute value of the acceleration of the drive element reaches the threshold value.

In other words, the pitch angles are adjusted by adjusting the acceleration imparted by the electric motor to the drive element.

With general reference to rotors configured in such a way that the respective blades can only take on a discrete number of different pitch angles, there is a need in the industry to promptly identify the actual pitch angle of the blades without using physical sensors, in order to reduce the complexity and overall weight of the anti-torque rotor.

There is also a need to promptly adjust the pitch angle of the blades if it differs from the desired value, with the minimum number of components to further reduce the complexity and overall weight of the anti-torque rotor.

The aim of the present invention is to realise a method for estimating the pitch angle of the blades of a rotor for an aircraft capable of hovering, which allows to satisfy at least one of the needs specified above in a simple and economical way.

According to the invention, this aim is achieved by a method for estimating the pitch angle of a rotor blade for an aircraft, as claimed in claim 1.

The present invention also relates to a rotor for an aircraft, in particular an anti-torque rotor for a helicopter, as claimed in claim 12.

For a better understanding of the present invention, seven preferred non-limiting embodiments are described below, purely by way of example and with the aid of the attached drawings, wherein:

- Figure 1 is a perspective view of a helicopter with an anti-torque rotor made according to the dictates of the present invention;
- Figure 2 is a schematic view of some details of the anti-torque rotor of the helicopter in Figure 1;
- Figure 3 is a functional diagram of further details of the anti-torque rotor in Figure 2;
- Figure 4 is a flowchart illustrating the operational steps of a first embodiment of a method for estimating the pitch angle of the blades of a rotor made according to the dictates of the present invention; and
- Figure 5 is a flowchart illustrating the operational steps of a second embodiment of a method for estimating the pitch angle of the blades of a rotor made according to the dictates of the present invention.

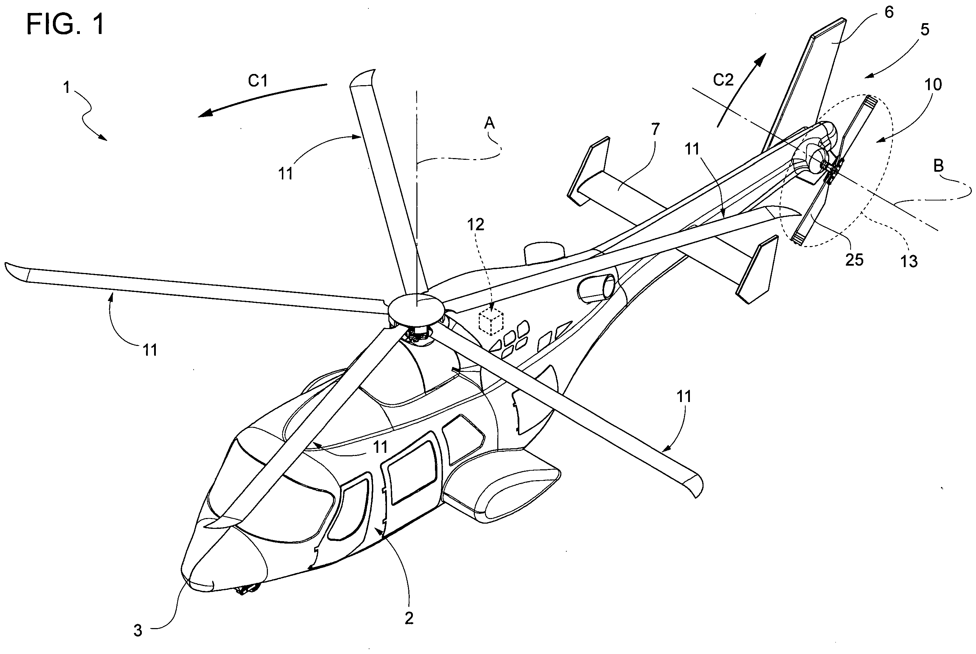

With reference to Figure 1, 1 denotes a helicopter.

The helicopter 1 essentially comprises:

- a fuselage 2 with a nose 3 arranged at the front;
- a drive unit 12 (only schematically illustrated in Figure 1);
- a main rotor 4 provided with a plurality of blades 11 placed at the top of the fuselage 2, operated by the drive unit 12 and rotating about an axis A;
- a tail portion 5 arranged on the opposite side of the fuselage 2 with respect to the nose 3 and comprising a tail fin 6 and a tail plane 7 projecting cantilevered from either side of the tail fin 6; and
- an anti-torque rotor 10 carried by the tail portion 5.

As is well known, the operation of the rotor 4 allows the lift acting on the helicopter 1 to be adjusted and consequently the altitude of helicopter 1 itself to be varied.

In a known way, the blades 11 are articulated so as to be able to vary the inclination of the rotor disc, i.e. the ideal disc defined by the free ends of the blades 11 opposite the axis A.

Thus, the rotor 4 controls the forward/reverse and lateral movement of the helicopter 1.

The rotation of the blades 11 about the axis A results in the application of a first torque C1 on the fuselage 2. This first torque C1 would tend to determine the rotation of the helicopter 1 about the axis A itself.

The anti-torque rotor 10 is designed to generate a second torque C2 of adjustable modulus and having a main component in the opposite direction to the first torque C1, so that the yaw angle of the helicopter 1 can be adjusted.

When the main component of such second torque C2 is of a magnitude equal to the first torque C1, the anti-torque rotor 10 prevents rotation of the helicopter 1 about a yaw axis substantially parallel to the axis A and passing through the centre of gravity of the helicopter 1.

When the main component of this second torque C2 is of lower or higher modulus than the first torque C1, the anti-torque rotor 10 causes a change in the yaw angle of the helicopter 1, i.e. the rotation of the helicopter 1 with respect to the yaw axis.

In certain manoeuvres to be carried out particularly quickly, the anti-torque rotor 10 generates a second torque C2 in concordance with the first torque C1, so that the helicopter 1 is quickly rotated in the same direction as the first torque C1.

The anti-torque rotor 10 is of the type described in European patent application 23220515.3, the contents of which are incorporated by reference in the present application.

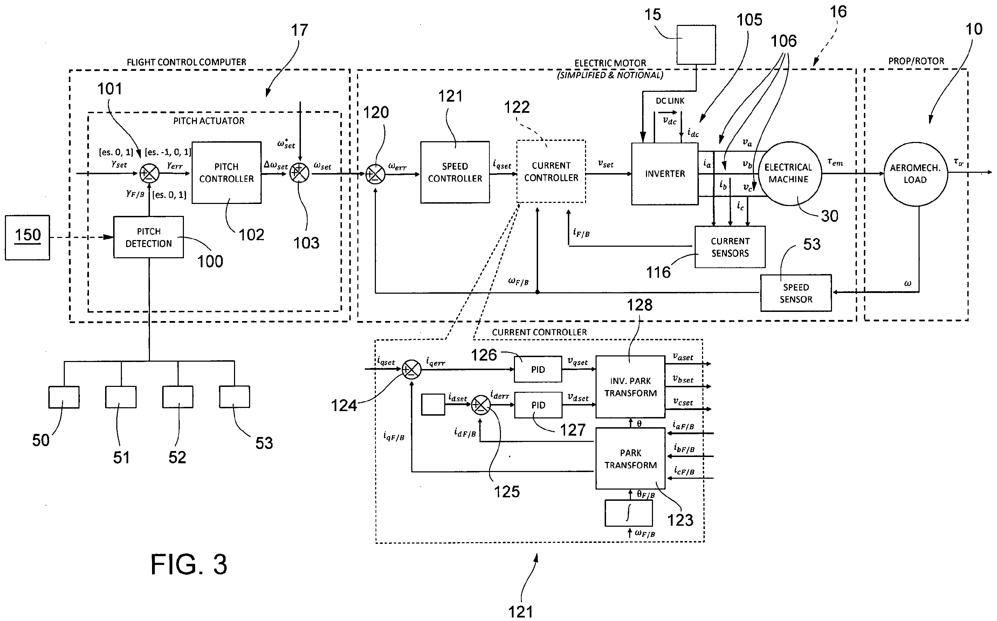

In a nutshell, the anti-torque rotor 10 comprises, only schematically illustrated in Figure 3:

- a source 15 of electricity;
- a control unit 17 known as the flight control computer; and
- an electric motor 16 (only schematically shown) controlled by the unit 17 and electrically powered by the source 15.

The electric motor 16 further comprises an electric machine 30.

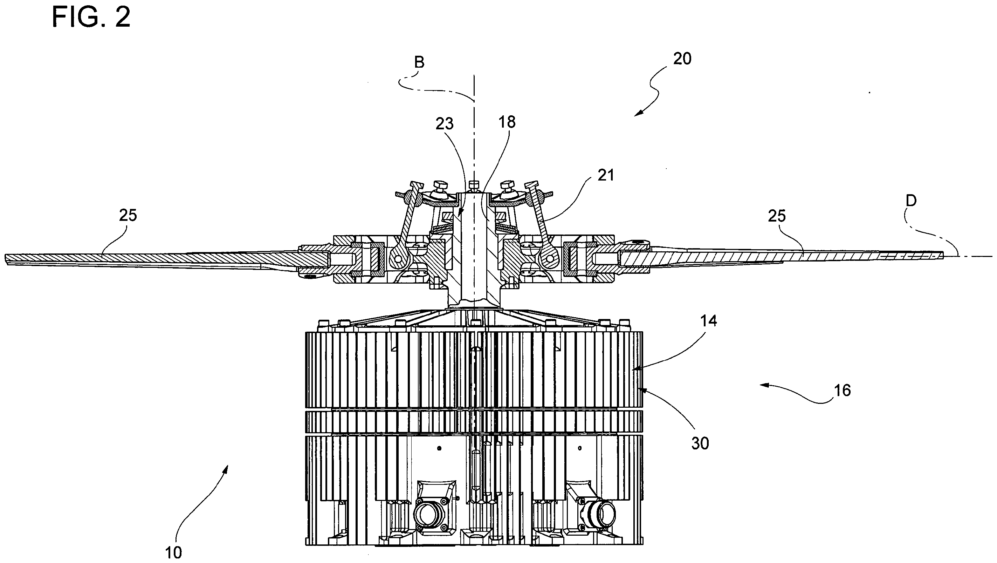

With reference to Figure 2, the electrical machine 30 comprises, in a nutshell:

- a stator 14 fixed with respect to an axis B; and
- a shaft 18 rotating about the axis B with respect to the stator 14.

The anti-torque rotor 10 also comprises:

- a hub 19 rotating about the axis B, coupled to the shaft 18 and on which a plurality, two in the case shown, of blades 25 are articulated, extending along respective axes D transverse to the axis B; and
- a drive element 20 also rotating about the axis B.

The free ends of the blades 25 define an imaginary circumference referred to below as the rotor disc 13.

The source 15 could comprise an electric power generator operatively connected to the drive unit 12, it could comprise a plurality of batteries, or it could be any source of electricity.

In the remainder of this description, the term "hub" refers to a component of the anti-torque rotor 10 rotating about the axis B integrally with the blades 25 under all operating conditions of the anti-torque rotor 10 itself.

The shaft 18 is rotated by the motor 16 with an adjustable modulus acceleration.

The drive element 20 is spaced from the hub 19 parallel to the axis B.

The anti-torque rotor 10 also comprises:

- a plurality of connecting members 21 hinged on the drive element 20 and on respective blades 25 about mutually parallel axes; and
- constraint means 23 adapted to constrain the hub 19 and the drive element 20 to each other.

The connecting members 21 are operable to determine the rotation of the blades 25 about the respective axes D, so as to adjust thee respective pitch angles $\gamma$ between two discrete and distinct values, hereafter referred to as $\alpha$ and $\beta$.

In the case shown, the $\alpha$ value is positive and the $\beta$ value is negative.

In summary, the constraint means 23 are configured to:

- keep the drive element 20 and hub 19 angularly integral with each other about the axis B and in a first relative position to each other, when the absolute value of the acceleration a of the electric motor 16 is less than a threshold value Ta, so that the pitch angles $\gamma$ remain in the respective first values $\alpha$ or second values $\beta$; and
- allow relative rotation between the drive element 20 and hub 19 between the aforementioned first and second positions when the absolute value of acceleration a reaches the threshold value Ta, so that the pitch angles $\gamma$ vary between the respective first values $\alpha$ or second values $\beta$.

The helicopter 1 also comprises (Figure 3):

- a sensor 50 adapted to detect the wind speed w;
- a sensor 51 adapted to detect the outside air temperature OAT;
- a sensor 52 adapted to detect the altitude ALT of the helicopter 1 itself; and
- a sensor 53 adapted to detect the rotation speed $\omega$ of the hub 19 about the axis B and generating a corresponding signal $\omega_{F/B}$ associated with said rotation speed $\omega$.

The control unit 17 is programmed to generate an estimated value $\gamma_{F/B}$ of the pitch angle $\gamma$ of the blades 25 of the anti-torque rotor 10, and to control the angular velocity $\omega$ of the hub 19 and the pitch angle $\gamma$ so as to adjust the yaw angle of the helicopter 1 based on what the autopilot or pilot requires.

The adjustment of the torque C2 generated by the anti-torque rotor 10 is carried out, in particular, by acting on the angular velocity of the blade 25 in a continuous manner and by varying the pitch angle $\gamma$ of the blades 25 in a discrete manner.

The control unit 17 is programmed to receive, as input, a command relating to the yaw angle requested by the pilot or crew and to output a signal $\gamma_{SET}$ and a signal $\omega^*_{SET}$ associated with the value of the pitch angle $\gamma$ and the angular velocity $\omega$ of the hub 19 required to obtain the requested yaw angle, respectively.

With reference to Figure 3, the control unit 17 is programmed to:

- receive as input the signal $\gamma_{SET}$ and the signal $\omega^*_{SET}$ ; and
- provide as output a signal $\omega_{SET}$ for the electric motor 16.

The signal $\gamma_{SET}$ is digital and can take on the values 0 or 1 corresponding to the first value $\alpha$ and the second value $\beta$, respectively.

In particular, the control unit 17 comprises:

- a stage 100 programmed to estimate a value for the pitch angle $\gamma_{F/B}$;
- a comparison stage 101 programmed to compare the signal $\gamma_{set}$ with the estimated value of the pitch angle $\gamma_{F/B}$, and to generate a digital signal $\gamma_{err}$ representative of whether or not $\gamma_{set}$ coincides with the estimated value of the pitch angle $\gamma_{F/B}$;
- a controller 102 programmed to generate a signal $\Delta\omega_{set}$ representative of the angular velocity change $\omega$ required at the hub 19 to arrange the blades 25 at the pitch angle $\gamma_{SET}$ if $\gamma_{ERR}$ is non-zero; and
- a totalizer 103 receiving as input the signals $\Delta\omega_{set}$ and $\omega^*_{set}$ and outputting the signal $\omega_{SET}$ as the algebraic sum $\Delta\omega_{set} + \omega^*_{set}$.

The electric motor 16 comprises, in a nutshell, and only schematically illustrated in Figure 3:

- a three-phase voltage inverter 105 supplied with a direct current $i_{dc}$ and with a direct electrical voltage $v_{dc}$ from the source 15, and supplying as output three electrical voltages $v_a$, $v_b$, $v_c$ and three respective electrical currents $i_a$, $i_b$, $i_c$ alternating with each other phase-shifted to respective phases 106;
- the electrical machine 30, in particular a three-phase synchronous permanent magnet driving electrical machine, electrically powered by the respective phases 106 with the corresponding electrical voltages $v_a$, $v_b$, $v_c$ and respective electric currents $i_a$, $i_b$, $i_c$, and providing as output a driving torque $\tau_{em}$ acting on the shaft 18; and
- a plurality, three in the case shown, of sensors 116 adapted to detect respective values of currents $i_a$, $i_b$, $i_c$ and to generate respective signals $i_{aF/B}$, $i_{bF/B}$, $i_{cF/B}$.

The electric motor 16 also comprises:

- a totalizer 120 receiving as input the signal $\omega_{SET}$ from the totalizer 102 and the signal $\omega_{F/B}$ from the sensor 53, and generating as output a signal $\omega_{err}$ equal to $\omega_{set} - \omega_{F/B}$;
- a controller 121 receiving as input the signal $\omega_{err}$ and generating as output a signal $i_{qset}$ representing the target electric current powering the inverter 105; and
- a controller 122 receiving as input the signal $i_{qset}$ from the controller 121 and the signals $i_{aF/B}$, $i_{bF/B}$, $i_{cF/B}$ from the sensors 116, and generating a plurality of signals $v_{aset}$, $v_{bset}$ $v_{cset}$ associated with respective electrical reference voltages for corresponding phases 106.

The value of the direct current $i_{dc}$ and the direct electrical voltage $v_{dc}$ supplied by the source 15 to the inverter 105 are determined on the basis of signals $v_{aset}$, $v_{bset}$ $v_{cset}$.

In particular, the controller 121 is a PID controller and provides the signal $i_{qset}$ according to the formula:

$$i_{set} = K_{p,\omega}\omega_{err} + K_{i,\omega}\int_0^t \omega_{err}\ dt + K_{d,\omega}\frac{d\omega_{err}}{dt}$$

where $K_{p,\omega}$; $K_{i,\omega}$ and $K_{d,\omega}$ are constant values stored in the controller 121 itself.

The controller 122 comprises, in turn:

- a computing stage 123 receiving input signals $i_{aF/B}$, $i_{bF/B}$, $i_{cF/B}$ from the sensors 116 and programmed to compute a signal $i_{qF/B}$ according to the formula: $(i_{dF/B}, i_{qF/B}, i_{oF/B}) = \mathcal{P} (i_{aF/B}, i_{bF/B}, i_{cF/B})$ wherein P is the Park transform;
- a totalizer 124 receiving as input the signals $i_{qset}$ from the controller 121 and $i_{qF/B}$ from the computing stage 123 and providing as output the signal $i_{qerr}$ as the difference $i_{qset} - i_{qF/B}$;
- a totalizer 125 receiving as input the signals $i_{dset}$ and $i_{dF/B}$ from the computing stage 123 and supplying as output the signal $i_{derr}$ as the difference $i_{dset} - i_{dF/B}$;
- a PID stage 126 receiving as input the signal $i_{qerr}$ from the totalizer 124 and outputting a signal $v_{qset}$ calculated as:

$$v_{q,set} = K_{p,q} i_{q,err} + K_{i,q} \int_0^t i_{q,err}\ dt + K_{d,q} \frac{di_{q,err}}{dt}$$

where $K_{p,q}$; $K_{i,q}$ and $K_{d,q}$ are constant values stored in the PID stage 126;

- a PID stage 127 receiving as input the signal $i_{derr}$ from the totalizer 125 and outputting a signal $v_{dSET}$ calculated as:

$$v_{d,set} = K_{p,d} i_{d,err} + K_{i,d} \int_0^t i_{d,err}\ dt + K_{d,d} \frac{di_{d,err}}{dt}$$

where $K_{p,d}$; $K_{i,d}$ and $K_{d,d}$ are constant values stored in PID stage 127; and

- a computing stage 128 receiving as input the signals $V_{qset}$, $V_{dset}$ $V_{0set}$ from PID stages 126, 127 and programmed to compute signals $v_{aset}$, $v_{bset}$ $v_{cset}$ according to the formula: $v_{aset}$, $v_{bset}$ $v_{cset} = P^{-1}$ ($i_{aF/B}$, $i_{bF/B}$, $i_{cF/B}$) where $P^{-1}$ is the inverse Park transform.

In the case illustrated, the signal $i_{dset}$ is zero.

The computing stage 123 also receives as input the signal $\omega_{F/B}$ from the sensor 53, and computes the signal $\theta_{F/B}$ associated with the angle of rotation of the hub 19 with respect to the stator 14 of the electrical machine 30, by integration of the time course of the angular velocity $\omega_{F/B}$.

The computing stage 128 receives an input the signal $\theta_{F/B}$ from computing stage 123.

In particular, the Park transform P is a linear application represented by the following matrix:

$$\begin{bmatrix} cos\ \theta & cos\left(\theta - \frac{2\pi}{3}\right) & cos\left(\theta + \frac{2\pi}{3}\right) \\ -sin\ \theta & -sin\left(\theta - \frac{2\pi}{3}\right) & -sin\left(\theta + \frac{2\pi}{3}\right) \\ \frac{1}{2} & \frac{1}{2} & \frac{1}{2} \end{bmatrix}.$$

The Park transform P corresponds to a change of reference from a reference system (a, b, c) corresponding to phases 106 and integral to the stator 14 of the electrical machine 30 to a reference system (d, q, 0) integral to the shaft 18 of the electrical machine 30 and rotating about the first reference system with angular velocity $\omega$.

In particular, the reference system (d, q, 0) is such that the axis 0 corresponding to a current $i_{or}$ is null, the axis q is orthogonal to the magnetic flux generated by the electrical machine 30 and therefore contributes to the driving torque $\tau_{em}$ generated by the electrical machine 30, and the axis d is parallel to the aforementioned magnetic flux and therefore does not contribute to the driving torque $\tau_{em}$ generated by the electrical machine 30.

The currents $i_{qset}$, $i_{dset}$, $i_q$, $i_d$, $i_o$ and the voltages $v_{aset}$, $v_{aset}$, $v_{0set}$ refer to the reference system (d, q, 0) while the currents $i_a$, $i_b$, $i_c$; $i_{aset}$, $i_{bset}$, $i_{cset}$ and the voltages $v_a$, $v_b$, $v_c$; $v_{aset}$, $v_{bset}$, $v_{cset}$ refer to the reference system (a, b, c).

The control unit 17 also comprises a storage stage 150 within which the following are stored:

- a first table, which associates a plurality of values of the electro-mechanical efficiency $\eta$ of the electrical machine 30 with corresponding values of the angular velocity $\omega$ of the hub 19;
- a second table, which associates a plurality of values of air density $\rho_{air}$ and corresponding pairs of values of outside air temperature OAT and altitude ALT; and
- the values of moment of inertia J, damping coefficient B and geometric parameters $\phi$ of the shaft 18, hub 19 and blades 25.

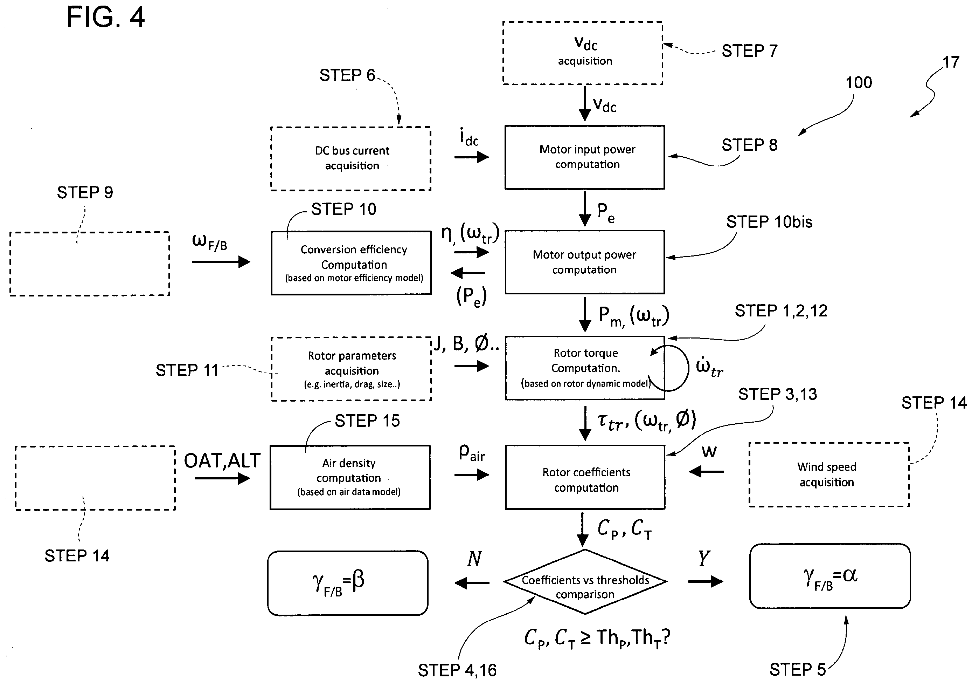

Advantageously, the stage 100 of the control unit 17 is programmed to (Figure 4):

- compute a value of the driving torque $\tau_{em}$ generated by the electrical machine 30 (STEP 1);
- compute a value of the torque $\tau_{tr}$ required by the anti-torque rotor 10 (STEP 2);
- compute a value of the power coefficient $C_p$ and thrust coefficient $C_T$ of the anti-torque rotor 10, based on the torque $\tau_{tr}$ required by the anti-torque rotor 10 (STEP 3);

compare the values of the power coefficients $C_p$ and thrust $C_T$ with respective threshold values $Th_P$, $Th_T$ (STEP 4); and estimate a value $\gamma_{F/B}$ of the pitch angle $\gamma$ based on the result of said step iv) (STEP 5).

In the case illustrated, stage 100 of the control unit 17 is programmed to (STEP 16):

- compute an estimated value of the pitch angle $\gamma_{F/B}$ of the blades 25 equal to the value $\alpha$ in the case where the coefficients of power $C_p$ and thrust $C_T$ are both greater than or equal to the respective threshold values $Th_P$, $Th_T$; and
- compute an estimated value of the pitch angle $\gamma_{F/B}$ of the blades 25 equal to the value $\beta$ in the case where at least one of the coefficients of power $C_p$ and thrust $C_T$ is less than the respective threshold value $Th_P$, $Th_T$.

With reference to Figure 4, stage 100 of the control unit 17 is programmed for:

- acquire a value of the continuous current $i_{dc}$ and the continuous electrical voltage $v_{dc}$ supplied by the source 15 to the inverter 105 (STEP 6 and STEP 7);
- compute a value of the electrical power Pe input to the electrical machine 30 as the product of the direct current $i_{dc}$ and the direct electrical voltage $v_{dc}$ with which the inverter 105 is supplied (STEP 8);
- acquire from the sensor 53 the signal $\omega_{F/B}$ (STEP 9);
- receive from the storage stage 150 the value of the efficiency $\eta$ as a function of the signal $\omega_{F/B}$ and of the power Pe(STEP 10) and compute a value of the mechanical power Pm generated by the electrical machine 30 as $\eta * i_{dc} * v_{dc}$ (STEP 10bis); and
- compute a value of the mechanical torque Cm generated by the electrical machine 30 on the basis of the value of the mechanical power Pm and the signal $\omega_{F/B}$ detected by the sensor 53.

Stage 100 of the control unit 17 is also programmed to:

- compute an angular acceleration value $d\omega/dt$ of the hub 19, based on the angular velocity value $\omega_{F/B}$ detected by the sensor 53;
- receive from storage stage 150 the values of moment of inertia J, damping coefficient B and geometric parameters $\phi$ (STEP 11);
- compute a value for the torque $\tau_{tr}$ required of the anti-torque rotor 10, based on the torque $\tau_{em}$ and the damping and stiffness torques associated with the moment of inertia J, damping coefficient B and geometric parameters $\phi$ respectively (STEP 12);
- acquire the signals associated with wind speed w from the sensor 50 (STEP 13), outside air temperature OAT from the sensor 51, and altitude ALT from the sensor 52 (STEP 14);
- compute an air density value $\rho_{air}$ based on the outside air temperature OAT and altitude ALT values of the helicopter 1 (STEP 15); and
- compute the value of the power coefficients $C_P$ and thrust $C_T$ on the basis of the value of the air density $\rho_{air}$ and the wind speed w (STEP 16).

In more detail, the control unit 17 is programmed to compute the value of the torque $\tau_{tr}$ required of the anti-torque rotor 10 as the difference between the torque $\tau_{EM}$ delivered by the electric motor 16 and the sum of the inertia, damping and stiffness torques associated with the moment of inertia J, the damping coefficient B and the geometric parameters $\phi$, respectively (STEP 12).

Finally, the control unit 17 is programmed to estimate that (STEP 16):

- the pitch angle $\gamma_{F/B}$ of the blades 25 is equal to the value $\alpha$ if both torque and thrust coefficients $C_P$, $C_T$ are greater than or equal to the respective threshold value $Th_P$, $Th_T$; and
- the pitch angle $\gamma_{F/B}$ of the blades 25 is equal to the value $\beta$ if at least one of the torque and thrust coefficients $C_P$, $C_T$ is less than the respective threshold value $Th_P$, $Th_T$.

In particular, the power and thrust coefficients $C_P$, $C_T$ are defined as:

$$C_P = P_{tr} / (\rho_{air} * V^3_{tip} * A)$$

$$C_T = T_{tr} / (\rho_{air} * V^2_{tip} * A)$$

where $P_{tr}$ and $T_{tr}$ are the power and thrust generated by the anti-torque rotor 10, $V^3_{tip}$ is the speed at the free end of the blades 25, and A is the area of the rotor disc 13.

In the case illustrated, the thrust coefficient $C_T$ is estimated to be equal to: $0.5 * \sigma * b * (1/3 * \varphi - 1/2 * \xi)$, where:

- $\sigma$ is the solidity of the anti-torque rotor 10;
- b an appropriate coefficient representative of the shape of the blades 15;
- $\varphi$ is the angle of incidence of the blades 25, which is associated with the pitch angle $\gamma$ through the inclination of the wind speed w with respect to the rotor disc 13; and
- $\xi$ a coefficient taking into account the crosswind acting on the anti-torque rotor 10 or the climb/forward speed of the helicopter 1.

The power coefficient $C_P$ is estimated equal to $k^* C_T^{1,5}+\varsigma^*C_{D0}$, wherein k and $\varsigma$ are appropriate coefficients and $C_{D0}$ is the coefficient of resistance of the blades 25 for zero lift of the blades 25 themselves.

The lift coefficient is, in turn, proportional to the angle of incidence of the blades 25, which is associated with the pitch angle $\gamma$ via the wind speed w.

In particular, the wind speed w is taken into account in order to distinguish the pitch angle from the angle of incidence, i.e. the angle defined between the air current and the chord of the blades 25.

In use, the operation of the rotor 4 allows lifting/lowering, forward/backward and lateral movement of the helicopter 1.

The actuation of the rotor 4 generates the first torque C1 on the fuselage 2, which would result in the rotation of the helicopter 1 about the yaw axis.

The operation of the anti-torque rotor 10 generates a second torque C2 on the fuselage 2 in the opposite direction to the first torque C1. This second torque C2 determines the yaw angle of the helicopter 1.

The source 15 supplies the inverter 105 of the electric motor 16 with direct current $i_{dc}$ and direct electrical voltage $v_{dc}$.

The sensors 50, 51, 52, 53 detect, respectively, wind speed w, outside air temperature OAT, altitude ALT of the helicopter 1 itself, and generate a signal $\omega_{F/B}$ representative of the rotation speed $\omega$ of the hub 19 about the axis B; and provide respective signals to stage 100 of the control unit 17.

The operation of the helicopter 1 is also described based on a condition in which the absolute value of the acceleration a of the shaft 18 is less than the threshold value Ta and the pitch angles of the blades $\gamma$ of the blades 25 assume a first value $\alpha$.

The pilot or autopilot requests a particular yaw angle via the flight controls.

With reference to Figure 3, the control unit 17 receives as input from the flight controls the yaw angle requested by the autopilot or pilot and generates the signals $\gamma_{set}$ and $\omega^*_{set}$ associated respectively with the value of the pitch angle $\gamma$ and the angular velocity $\omega$ of the hub 19 required to obtain the requested yaw angle.

In the remainder of this description, it is assumed that the signal $\gamma_{set}$ corresponds to a pitch angle $\gamma$ equal to a second value $\beta$ and that the estimated value of the pitch angle $\gamma_{F/B}$ is equal to a first value $\alpha$.

In more detail, stage 101 of the control unit 17 compares the signal $\gamma_{set}$ with the pitch angle $\gamma_{F/B}$ estimated by stage 100, and generates a digital signal $\gamma_{err}$ representative of whether or not $\gamma_{set}$ coincides with the estimated value $\gamma_{F/B}$.

The controller 102 generates the signal $\Delta\omega_{set}$ representing the change in angular velocity $\omega$ over time required for the hub 19 to arrange the blades 25 at the pitch angle $\gamma_{set}$ in the case where $\gamma_{err}$ is non-zero, and the totalizer 103 outputs the signal $\omega_{set}$ as the algebraic sum $\Delta\omega_{set}+\omega^*_{set}$.

With reference to Figure 3, stage 100 estimates the value of the pitch angle $\gamma_{F/B}$ of the blades 25 of the anti-torque rotor 10 as follows.

In particular, stage 100 acquires the values of direct current $i_{dc}$ and direct electrical voltage $v_{dc}$ available from the source 15 to the electrical machine 30 (STEP 7 and 8).

Stage 100 of the control unit 17 also (Figure 4):

- computes the value of the electrical power $P_e$ input to the electrical machine 30 as the product of the direct current $i_{dc}$ and the direct electrical voltage $v_{dc}$ with which the inverter 105 is supplied (STEP 8);
- receives from the storage stage 150 the value of the efficiency $\eta$ as a function of the signal $\omega_{F/B}$ generated by the sensor 53 (STEP 9) and computes a value of the mechanical power Pm generated by the electrical machine 30 as $\eta^*$ $i_{dc}^*$ $v_{dc}$ (STEP 10, 10bis); and
- computes a value of the mechanical torque Cm generated by the electrical machine 30 on the basis of the value of the mechanical power Pm and the signal $\omega_{F/B}$ generated by the sensor 53.

Stage 100 of the control unit 17, also:

- computes the angular acceleration value $d\omega/dt$ of the hub 19, based on the signal $\omega_{F/B}$ generated by the sensor 53;
- receives from the storage stage 150 the values of moment of inertia J, damping coefficient B and geometric parameters $\phi$;
- computes the value of the torque $\tau_{tr}$ required of the anti-torque rotor 10, based on the torque $\tau_{em}$ and the associated

moment of inertia J, damping coefficient B and geometric parameters $\phi$ (STEP 12);
- acquires the wind speed w from the sensor 50, outside air temperature OAT from the sensor 51, and altitude ALT from the sensor 52 (STEP 13);
- computes an air density value $\rho_{air}$ (STEP 15) based on the outside air temperature OAT and altitude ALT values of helicopter 1; and
- computes the values of the power coefficients $C_P$ and thrust $C_T$ on the basis of the value of air density $\rho_{air}$ and wind speed w (STEP 16).

Finally, stage 100 of the control unit 17 (STEP 4, 16) computes:

- an estimated value of pitch angle $\gamma_{F/B}$ of the blades 25 equal to the value $\alpha$ if both power coefficients $C_p$ and thrust $C_T$ are greater than or equal to the respective threshold value $Th_P$, $Th_T$; and
- an estimated value of the pitch angle $\gamma_{F/B}$ of the blades 25 equal to the value $\beta$ if at least one of the coefficients of power $C_p$ and thrust $C_T$ is less than the respective threshold value $Th_P$, $Th_T$.

The electrical machine 30 generates the torque $\tau_{em}$, based on the signal $\omega_{set}$ and the angular velocity value $\omega$ of the hub 19 detected by the sensor 53.

Specifically, the totalizer 120 of the electric motor 16 receives as input the signal $\omega_{set}$ from the totalizer 102 and the signal $\omega_{F/B}$ from the sensor 53, and generates as output a signal $\omega_{err}$ equal to $\omega_{set}-\omega_{F/B}$.

The controller 121 of the electric motor 16 receives as input the signal $\omega_{err}$ and generates as output the signal $i_{qset}$ representing the target electric current $i_q$ with which to power the three-phase line 106 in the reference system (q, d, 0) integral with the shaft 18.

The controller 122 receives as input the signal $i_{qSET}$ from the controller 121 and the signals $i_{aF/B}$, $i_{bF/B}$, $i_{cF/B}$ associated with the currents $i_a$, $i_b$, $i_c$ of the three-phase line 106 from the sensor 116, and generates the signals $v_{aset}$, $v_{bset}$ $v_{cset}$.

The source 15 supplies the inverter 105 with DC voltage $v_{dc}$ and DC current $i_{dc}$, based on the signals $v_{aset}$, $v_{bset}$, $v_{cset}$.

The electrical machine 30 is powered with the signal voltages $v_a$, $v_b$ $v_c$ from the respective phases 106 and generates the torque $\tau_{EM}$ made available at the shaft 18.

The hub 19 of the anti-torque rotor 10 rotates with an angular speed $\omega$ determined by the driving torque $\tau_{em}$ and the torque $\tau_{tr}$.

Furthermore, the acceleration a of the shaft 18 is brought to a value greater than Ta, i.e. concordant with the first direction of rotation about the axis B, so that the hub 19 determines the change in pitch angle $\gamma$ from the estimated value $\gamma_{F/B}$ equal to the angle $\alpha$ at value $\gamma_{set}$.

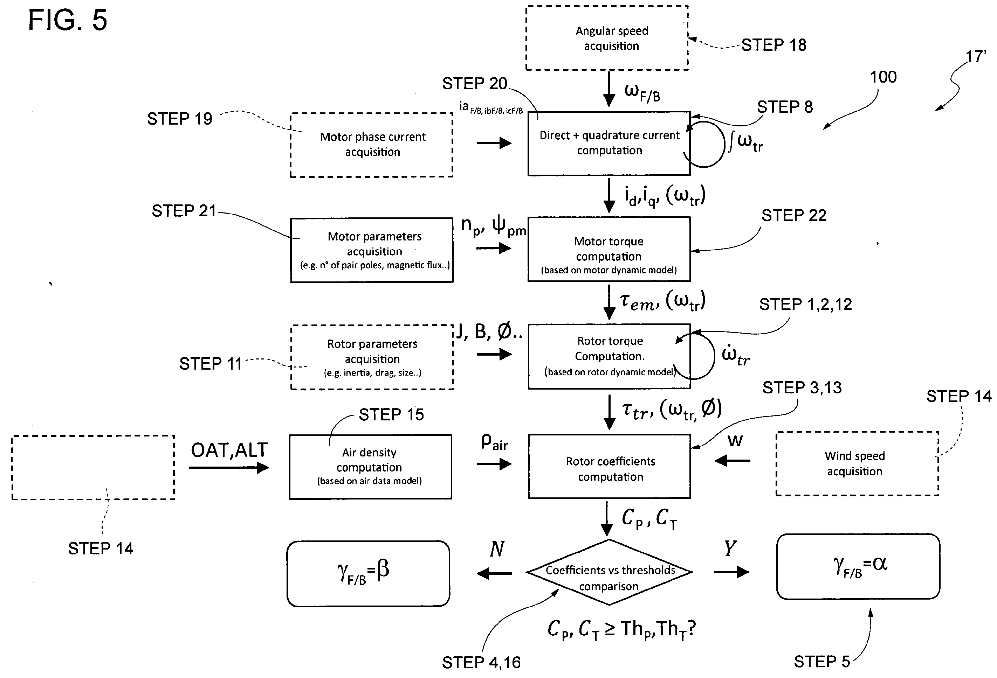

With reference to Figure 5, a method of estimating the pitch angle $\gamma_{F/B}$ of an anti-torque rotor 10' according to a different embodiment of the invention and implemented by a control unit 17' is shown.

The anti-torque rotor 10' is similar to the anti-torque rotor 10' and will be described hereafter only insofar as it differs from the latter; equal or equivalent parts of the anti-torque rotors 10, 10' will be marked with the same reference numbers where possible.

In particular, the control unit 17' of the anti-torque rotor 10' differs from the control unit 17 in that it is programmed to perform instead of the steps indicated above as STEP 7, 8, 9, 10, 11, the steps of:

- acquiring from the sensor 53 the value of rotation speed $\omega_{F/B}$ of the hub 19 (STEP 18);
- computing a value of a rotation angle $\theta$ of the hub 19 with respect to the stator 14 of the electrical machine 30', based on the value of the rotation speed $\omega_{F/B}$ of the hub 19 acquired by the sensor 53, in particular by integration over time of the trend in angular velocity $\omega_{F/B}$;
- acquiring from the sensors 125 the respective signals $i_{aF/B}$, $i_{bF/B}$, $i_{cF/B}$ (STEP 19);
- computing the values of the currents $i_d$, $i_q$ in the reference system (d, q, 0) integral with the shaft 18 on the basis of the computed value of the rotation angle $\theta_{F/B}$ of the hub 19 and the values of the signals $i_{aF/B}$, $i_{bF/B}$, $i_{cF/B}$ (STEP 20);
- acquiring from storage stage 150 a plurality of electrical machine parameters 30', such as the number of polar pairs $n_p$, the magnetic flux $\psi_{pm}$ (STEP 21); and
- computing the value of torque $\tau_{em}$ generated by the electrical machine 30' on the basis of the direct currents $i_d$ and quadrature currents $i_q$, and on the basis of the parameters of the electrical machine 30' (STEP 22) according to the formula:

$$\tau_{em} = 1.5 * n_p * \psi_{pm}$$

The operation of the anti-torque rotor 10' is similar to that of the anti-torque rotor 10 and is described only insofar as it differs from it.

In particular, the control unit 17' differs from the control unit 17 in that it is programmed to perform the steps indicated as STEP 19, 20, 21 and 22 instead of the steps indicated as STEP 7, 9, 10 and 11.

An examination of the method for estimating the pitch angle $\gamma$ and of the anti-torque rotor 10, 10' made according to the present invention reveals the advantages that can be achieved.

In more detail, the control unit 17, 17' is programmed to:

- compute a value of the torque $\tau_{em}$ generated by the electric machine 30, 30' of the electric motor 16;
- compute a value of the torque $\tau_{tr}$ required by the anti-torque rotor 10, 10';
- compute the value of the torque and thrust coefficients $C_P$, $C_T$ of the rotor 10, 10', on the basis of the values of the torques $\tau_{em}$, $\tau_{tr}$ respectively delivered by the electrical machine 30, 30' and required by the rotor 10, 10' itself;
- compare the value of the torque and thrust coefficients $C_P$, $C_T$ with respective threshold values $Th_P$, $Th_T$; and
- estimate the value of the pitch angles $\gamma_{F/B}$ of the blades 25 based on the result of the above comparison.

It is thus possible to readily identify the effective pitch angle $\gamma$ of the blades 25 without using dedicated physical sensors, thus reducing the complexity and overall weight of the anti-torque rotor 10, 10'.

The controller 102 is programmed to generate a signal $\Delta\omega_{set}$ for the electric motor 16 representative of the change in angular velocity $\omega$ over time and therefore of the angular acceleration required at the hub 19 to arrange the blades 25 with the pitch angle $\gamma_{set}$ in the case where $\gamma_{err}$ is different from zero, i.e. in the case where the estimated pitch angle $\gamma_{F/B}$ from stage 100 is different from the pitch angle $\gamma_{set}$.

Thus, the control unit 17, 17' enables adjustment of the pitch angle $\gamma$ of the blades 25 of an anti-torque rotor 10 of the type described in European patent application 23220515.3 on behalf of the Applicant, i.e. wherein the pitch angle $\gamma$ is adjusted between discrete values $\alpha$, $\beta$ by acting on the acceleration a of the hub 19.

It is clear that modifications and variants can be made to the method for estimating the pitch angle $\gamma$ and to the anti-torque rotor 10, 10' described and illustrated herein without departing from the scope of protection defined by the claims.

In particular, the pitch angles $\alpha$, $\beta$ of the blades 25 of the anti-torque rotors 10, 10' could take on any number, specifically greater than two, of discrete values different from each other.

The estimation method could, in addition, comprise the step of estimating the pitch angles $\gamma_{F/B}$ of the blades 25 on the basis of the time trend of the torque and thrust coefficients $C_P$, $C_T$ with respective threshold values $Th_P$, $Th_T$.

The rotor 10, 10' could also be used in a tilt-rotor aircraft in a function other than the anti-torque function. In that case, the axis B could be tilted about an axis parallel to a transverse axis of the tilt-rotor aircraft between:

- a position parallel to a longitudinal axis of the tilt-rotor aircraft assumed when the tiltrotor itself is in the "aeroplane" position; and
- a position parallel to an axis orthogonal to the longitudinal and transverse axes of the tilt-rotor aircraft assumed when the tilt-rotor aircraft itself is in the "helicopter" position.

The anti-torque rotor 10, 10' could also be used in a multi-rotor aircraft. In this case, the axis B could be fixed or tilting so that the aircraft can assume either an "aeroplane" or a "helicopter" position.

The rotor 10, 10' could also be used in a fixed-wing aircraft to generate the necessary thrust for flight.

The rotor 10, 10' could also be used as a pusher propeller in a heliplane, such as the EUROCOPTER X-3 aircraft as a vertical-axis main rotor.

The electric machine 30, 30' could be of a different type from the permanent magnet synchronous machine.

The electrical machine 30, 30' could comprise relays instead of the controller 121 and PID stages 126, 127.

The anti-torque rotor 10, 10' could include a number of blades 25 other than two.


**Claims**

1.  Method for estimating the pitch angle ($\gamma$) of the blades (25) of a rotor (10, 10') of an aircraft (1);

    said rotor (10, 10') comprising, in turn:

    - a motor member (16), in particular an electric machine (30, 30'), comprising, in turn, a stator (14) and an output shaft (18) rotating about said stator (14);
    - a hub (19) rotatable about said axis (B) and operatively connected with said output shaft (18) so as to be rotatable, in use, with an angular velocity ($\omega$) about said axis (B);
    - at least two blades (25) rotatable about said axis (B) integral with said hub (19) and rotatable about corresponding said second axes (D) of extension of the blades (25) transverse to said axis (B), so as to adjust the pitch angles ($\gamma$) of said blades (25) between a first value ($\alpha$) and a second value ($\beta$) different from each other;

**characterised in that** it comprises the steps of:

i) computing (STEP 1) a third value associated with the torque ($\tau_{em}$) generated by said motor member (16);

ii) computing (STEP 2) a fourth value associated with the torque ($\tau_{tr}$) required, in use, by said rotor (10, 10');

iii) computing (STEP 3, 13) a fifth value associated with the torque coefficient ($C_P$) and a sixth value associated with the thrust coefficient ($C_T$) of said rotor (10, 10'), also based on said fourth value associated with the torque ($\tau_{tr}$) required, in use, by said rotor (10, 10');

iv) comparing (STEP 4, 17) said fifth value with a seventh threshold value ($Th_P$), and said sixth value with an eighth threshold value ($Th_T$); and

v) estimating (STEP 5) a ninth value ($\gamma_{F/B}$) of said pitch angle ($\gamma$), on the basis of the result of said step iv).

2. Method according to claim 1, **characterised in that** it further comprises (STEP 14) step vi) of detecting a tenth value associated with the wind speed (w);
said step iii) comprising step vii) of computing said fifth and sixth values also on the basis of said tenth value.

3. Method according to claim 1 or 2, **characterised in that** it further comprises step vii) of computing (STEP 15) an eleventh value associated with the air density ($\rho_{air}$) ;
said step iii) including step viii) of computing said fifth value associated with the torque coefficient ($C_P$) and sixth value associated with the thrust coefficient ($C_T$) also on the basis of the said eleventh value associated with the air density ($\rho_{air}$).

4. Method according to claim 3, **characterised in that** it comprises the step ix) of detecting (STEP 14) a twelfth value associated with the air temperature (OAT) and a thirteenth value associated with the altitude (ALT) of said aircraft (1);
said step viii) comprising step x) of computing said eleventh value associated with the air density ($\rho_{air}$), on the basis of said twelfth and thirteenth values associated respectively with said air temperature (OAT) and said altitude (ALT) of said aircraft (1).

5. Method according to any one of the preceding claims, **characterised in that** said step ii) comprises the steps of:

xi) computing a fourteenth value associated with the angular acceleration ($d\omega/dt$) of said hub (19); and

xii) acquiring (STEP 11) a plurality of first parameters (J, B, $\overline{\Phi}$) of said rotor (10, 10'), and computing said fourth value associated with the required torque ($\tau_{tr}$) from said rotor (10, 10') also based on a plurality of first parameters (J, B, $\overline{\Phi}$) of said rotor (10, 10') and said fourteenth value associated with the angular acceleration ($d\omega/dt$) of said hub (19).

6. Method according to any one of the preceding claims, **characterised in that** it comprises the step xiii) of computing (STEP 8) a fifteenth value associated with the electrical power ($P_{and}$) input to said electrical machine (30);

said step i) comprising step xiv) of:

- acquiring (STEP 9) a sixteenth value associated with the rotational speed ($\omega_{F/B}$) of said hub (19);
- computing (STEP 10) a seventeenth value associated with the efficiency ($\eta$) of said electrical machine (30) as a function of said sixteenth value associated with the rotational speed ($\omega_{F/B}$) of said hub (19); and
- computing (STEP 10bis) an eighteenth value associated with the mechanical power (Pm) output by said electrical machine (30), on the basis of said fifteenth value associated with the electrical power ($P_e$) input to said electrical machine (30), of said sixteenth value associated with the rotational speed ($\omega_{F/B}$) of said hub (19), and of said seventeenth value associated with the efficiency ($\eta$) of said electrical machine (30);

said third value associated with the torque ($\tau_{em}$) generated by said electrical machine (30), based on said eighteenth value associated with the mechanical power (Pm) .

7. Method according to claim 6, **characterised in that** said step xiii) comprises the steps of:

xv) acquiring (STEP 7, 8) a nineteenth value and a twentieth value associated with the direct voltage ($v_{dc}$) and direct current ($i_{dc}$), respectively, input to an inverter (105); said inverter (105) powering said electrical machine (30) with alternating current and alternating voltage in use;

xvi) computing said third value associated with the torque ($\tau_{em}$) generated by said electrical machine (30), also based on said sixteenth, seventeenth, eighteenth, nineteenth and twentieth values.

8. Method according to any one of claims 1 to 4, **characterised in that** said step i) comprises the steps of:

xvii) acquiring (STEP 18) said sixteenth value associated with the rotational speed ($\omega_{F/B}$) of said hub (19) ;

xviii) working out a twentieth value associated with the angle of rotation ($\theta_{F/B}$) of said hub (19) with respect to said stator (14) of the electrical machine (30), on the basis of said eighteenth value ($\omega_{F/B}$) associated with the rotation speed ($\omega$) of said hub (19);

xix) acquiring (STEP 19) a twenty-first value associated with the current ($i_{aF/B}$, $i_{bF/B}$, $i_{cF/B}$) of each phase (106) of said electrical machine (30') in a first reference system (a, b, c) integral with said stator (14);

xxi) computing (STEP 20) a twenty-second value associated with the direct current ($i_d$) and a twenty-third value associated with the quadrature current ($i_q$) of said electrical machine (30') in a second reference system (q, b, 0) integral with said output shaft (18) of said electrical machine (30') based on said twentieth value ($\theta_{F/B}$) associated with the angle of rotation ($\theta$) of said hub (19) and twenty-first value associated with said current ($i_{aF/B}$, $i_{bF/B}$, $i_{cF/B}$) of each phase (106) of said electrical machine (30') in said first reference system (a, b, c);

said third value associated with the torque ($\tau_{em}$) generated by said electrical machine (30) also being computed on the basis of said eighteenth value ($\omega_{F/B}$) associated with the rotation speed ($\omega$) of said hub (19), twenty-second value associated with the direct current ($i_d$) and twenty-third value associated with the quadrature current ($i_q$) of said electrical machine (30') in said second reference system (q, b, 0) integral to said output shaft (18).

9. Method according to claim 8, **characterised in that** said step i) further comprises step xxii) (STEP 21) of acquiring second parameters ($n_P$, $\psi_P$) representative of said electrical machine (30);

said third value associated with the torque ($\tau_{em}$) generated by said electrical machine (30) also being computed on the basis of said second parameters ($n_P$, $\psi_P$) representative of said electrical machine (30).

10. Method according to any one of the preceding claims, **characterised in that** it comprises the steps of:

xxiii) associating a given flight manoeuvre to be performed with a target value ($\gamma_{set}$) of said pitch angle ($\gamma_{set}$) of said blades (25) and a target value ($\omega^*_{set}$) of said angular velocity ($\omega$) of said hub (19);

xxiii) comparing a target value ($\gamma_{set}$) of said pitch angle ($\gamma$) with said ninth estimated value ($\gamma_{F/B}$) of said pitch angle ($\gamma$);

xxiv) constraining said hub (19) and said blades (25) by means of a drive element (20), so as to associate the value of said pitch angle ($\gamma$) with the relative angular position between said hub (19) and said drive element (20), with reference to said axis (B);

xxv) keeping said drive and hub elements (20, 19) angularly integral with each other about said axis (B) and in at least one first relative position between them, when the absolute value of an acceleration (a) of said output shaft (18) is less than a third threshold value (Ta) in use, so that said pitch angles ($\gamma$) assume respective first values ($\alpha$);

xxvi) allowing relative rotation between said drive element and hub (20, 19) between said first and second positions when the absolute value of said acceleration (a) reaches, in use, said third threshold value (Ta);

xxvii) computing a twenty-fourth value of an angular velocity gradient ($\Delta\omega_{set}$) of said hub (19) necessary to bring said pitch angle ($\gamma$) back to said target value ($\gamma_{SET}$) ;

xxviii) computing a twenty-fifth corrected target value ($\omega_{set}$) of said angular velocity ($\omega$) of said hub (19), based on said angular velocity gradient value ($\Delta\omega_{set}$) and said target value ($\omega^*_{set}$); and

xxix) operating said motor member (16) on the basis of the difference ($\omega_{err}$) between a measured value of said angular velocity ($\omega$) of said hub (19) and said corrected target value ($\omega_{set}$).

11. Computer product loadable into a control unit and adapted, when executed, to implement the steps of a method according to any one of the preceding claims.

12. Rotor (10, 10') for an aircraft (1), comprising:

- a motor member (16), in particular an electric machine (30, 30'), comprising, in turn: a stator (14) and an output shaft (18) rotating about said stator (14);

- a hub (19) rotatable about said axis (B) and operatively connected with said output shaft (18) so as to be rotatable, in use, with an angular velocity ($\omega$) about said axis (B); and
- at least two blades (25) rotatable about said axis (B) integral with said hub (19) and rotatable about corresponding said second axes (D) of extension of the blades (25) transverse to said axis (B), so as to adjust the pitch angles ($\gamma$) of said blades (25) between a first value ($\alpha$) and a second value ($\beta$) different from each other;

**characterised in that** it comprises a control unit (17, 17') programmed to:

i) compute a third value associated with the torque ($\tau_{em}$) generated by said motor (16);
ii) compute (STEP 1, 2, 12) a fourth value associated with the torque ($\tau_{tr}$) required, in use, by said rotor (10, 10');
iii) computing (STEP 3, 13) a fifth value associated with the torque coefficient ($C_P$) and a sixth value associated with the thrust coefficient ($C_T$) of said rotor (10, 10'), also based on said fourth value associated with the torque ($\tau_{tr}$) required, in use, by said rotor (10, 10');
iv) comparing (STEP 4, 16) said fifth value with a seventh threshold value ($Th_P$), and said sixth value with an eighth threshold value ($Th_T$); and
v) estimating (STEP 5) a ninth value of said pitch angle ($\gamma$), based on the result of said step iv).

13. Rotor according to claim 12, **characterised in that** it further comprises:

- a drive element (20), which constrains said hub (19) and said blades (25) in such a way as to associate the value of said pitch angle ($\gamma$) with the relative angular position between said hub (19) and said drive element (20), with reference to said axis (B); and
- constraint means (23) configured to:

keep said drive and hub elements (20, 19) angularly integral with each other about said axis (B) and in at least one first relative position between them, when the absolute value of an acceleration (a) of said output shaft (18) is less, in use, than a third threshold value (Ta), so that said pitch angles ($\alpha$, $\beta$) assume respective first values ($\alpha$); and
allow relative rotation between said drive element and hub (20, 19) between said first and second positions when the absolute value of said acceleration (a) reaches, in use, said third threshold value (Ta);

14. Helicopter (1) comprising:

- a main rotor (4) adapted to provide the lift necessary for the support and the thrust necessary for the movement of the helicopter (1) itself;
- an anti-torque tail rotor (10, 10') to control the yaw angle of the helicopter itself and made according to claim 12 or 13.

15. Helicopter according to claim 13 or 14, **characterised in that** it comprises:

- a first sensor (50) adapted to detect the wind speed w;
- a second sensor (51) adapted to detect the outside air temperature (OAT);
- a third sensor (52) adapted to detect the altitude (ALT) of said helicopter (1) itself; and
- a fourth sensor (53) adapted to detect the rotation speed ($\omega$) of said hub (19) about said axis (B) and generate a corresponding signal ($\omega_{F/B}$) associated with said rotation speed ($\omega$);

said first, second, third and fourth sensors (50, 51, 52, 53) being operatively connected to said control unit (17, 17').

**Amended claims in accordance with Rule 137(2) EPC.**

1. Method for estimating the pitch angle ($\gamma$) of the blades (25) of a rotor (10, 10') of an aircraft (1);

said rotor (10, 10') comprising, in turn:

- a motor member (16), in particular an electric machine (30, 30'), comprising, in turn, a stator (14) and an output shaft (18) rotating about said stator (14);
- a hub (19) rotatable about said axis (B) and operatively connected with said output shaft (18) so as to be rotatable, in use, with an angular velocity ($\omega$) about an axis (B);
- at least two blades (25) rotatable about said axis (B) integral with said hub (19) and rotatable about corresponding said second axes (D) of extension of the blades (25) transverse to said axis (B), so as to adjust the pitch angles ($\gamma$) of said blades (25) between a first value ($\alpha$) and a second value ($\beta$) different from each other;

**characterised in that** it comprises the steps of:

i) computing (STEP 1) a third value of the torque ($\tau_{em}$) generated by said motor member (16);

ii) computing (STEP 2) a fourth value of the torque ($\tau_{tr}$) required, in use, by said rotor (10, 10');

iii) computing (STEP 3, 13) a fifth value of the torque coefficient ($C_P$) and a sixth value of the thrust coefficient ($C_T$) of said rotor (10, 10'), also based on said fourth value of the torque ($\tau_{tr}$) required, in use, by said rotor (10, 10');

iv) comparing (STEP 4, 17) said fifth value with a seventh threshold value ($Th_P$), and said sixth value with an eighth threshold value ($Th_T$); and

v) estimating (STEP 5) a ninth value ($\gamma_{F/B}$) of said pitch angle ($\gamma$), on the basis of the result of said step iv).

2. Method according to claim 1, **characterised in that** it further comprises (STEP 14) step vi) of detecting a tenth value of the wind speed (w);

said step iii) comprising step vii) of computing said fifth and sixth values also on the basis of said tenth value.

3. Method according to claim 1 or 2, **characterised in that** it further comprises step vii) of computing (STEP 15) an eleventh value of the air density ($\rho_{air}$);

said step iii) including step viii) of computing said fifth value of the torque coefficient ($C_P$) and sixth value of the thrust coefficient ($C_T$) also on the basis of the said eleventh value of the air density ($\rho_{air}$).

4. Method according to claim 3, **characterised in that** it comprises the step ix) of detecting (STEP 14) a twelfth value of the air temperature (OAT) and a thirteenth value of the altitude (ALT) of said aircraft (1);

said step viii) comprising step x) of computing said eleventh value of the air density ($\rho_{air}$), on the basis of said twelfth and thirteenth values of respectively said air temperature (OAT) and said altitude (ALT) of said aircraft (1).

5. Method according to any one of the preceding claims, **characterised in that** said step ii) comprises the steps of:

xi) computing a fourteenth value of the angular acceleration (dw/dt) of said hub (19); and

xii) acquiring (STEP 11) a plurality of first parameters (J, B, $\phi$) of said rotor (10, 10'), and computing said fourth value of the required torque ($\tau_{tr}$) from said rotor (10, 10') also based on a plurality of first parameters (J, B, $\phi$) of said rotor (10, 10') and said fourteenth value of the angular acceleration (dw/dt) of said hub (19).

6. Method according to any one of the preceding claims, **characterised in that** it comprises the step xiii) of computing (STEP 8) a fifteenth value of the electrical power ($P_{and}$) input to said electrical machine (30);

said step i) comprising step xiv) of:

- acquiring (STEP 9) a sixteenth value of the rotational speed ($\omega_{F/B}$) of said hub (19);
- computing (STEP 10) a seventeenth value of the efficiency ($\eta$) of said electrical machine (30) as a function of said sixteenth value of the rotational speed ($\omega_{F/B}$) of said hub (19); and
- computing (STEP 10bis) an eighteenth value associated with the mechanical power (Pm) output by said electrical machine (30), on the basis of said fifteenth value of the electrical power ($P_e$) input to said electrical machine (30), of said sixteenth value of the rotational speed ($\omega_{F/B}$) of said hub (19), and of said seventeenth value of the efficiency ($\eta$) of said electrical machine (30);

said third value of the torque ($\tau_{em}$) generated by said electrical machine (30), based on said eighteenth value of the mechanical power (Pm).

7. Method according to claim 6, **characterised in that** said step xiii) comprises the steps of:

xv) acquiring (STEP 7, 8) a nineteenth value and a twentieth value of the direct voltage ($v_{dc}$) and direct current ($i_{dc}$), respectively, input to an inverter (105); said inverter (105) powering said electrical machine (30) with alternating current and alternating voltage in use;

xvi) computing said third value of the torque ($\tau_{em}$) generated by said electrical machine (30), also based on said sixteenth, seventeenth, eighteenth, nineteenth and twentieth values.

8. Method according to any one of claims 1 to 4, **characterised in that** said step i) comprises the steps of:

xvii) acquiring (STEP 18) said sixteenth value of the rotational speed ($\omega_{F/B}$) of said hub (19);
xviii) working out a twentieth value of the angle of rotation ($\theta_{F/B}$) of said hub (19) with respect to said stator (14) of the electrical machine (30), on the basis of said eighteenth value ($\omega_{F/B}$) of the rotation speed ($\omega$) of said hub (19);
xix) acquiring (STEP 19) a twenty-first value of the current ($i_{aF/B}$, $i_{br/B}$, $i_{cF/B}$) of each phase (106) of said electrical machine (30') in a first reference system (a, b, c) integral with said stator (14);
xxi) computing (STEP 20) a twenty-second value associated with the direct current ($i_d$) and a twenty-third value of the quadrature current ($i_q$) of said electrical machine (30') in a second reference system (q, b, 0) integral with said output shaft (18) of said electrical machine (30') based on said twentieth value ($\theta_{F/B}$) associated with the angle of rotation ($\theta$) of said hub (19) and twenty-first value associated with said current ($i_{aF/B}$, $i_{bF/B}$, $i_{cF/B}$) of each phase (106) of said electrical machine (30') in said first reference system (a, b, c);
said third value of the torque ($\tau_{em}$) generated by said electrical machine (30) also being computed on the basis of said eighteenth value ($\omega_{F/B}$) of the rotation speed ($\omega$) of said hub (19), twenty-second value of the direct current ($i_d$) and twenty-third value of the quadrature current ($i_q$) of said electrical machine (30') in said second reference system (q, b, 0) integral to said output shaft (18).

9. Method according to claim 8, **characterised in that** said step i) further comprises step xxii) (STEP 21) of acquiring second parameters ($n_P$, $\psi_P$) representative of said electrical machine (30);
said third value of the torque ($\tau_{em}$) generated by said electrical machine (30) also being computed on the basis of said second parameters ($n_P$, $\psi_P$) representative of said electrical machine (30).

10. Method according to any one of the preceding claims, **characterised in that** it comprises the steps of:

xxiii) associating a given flight manoeuvre to be performed with a target value ($\gamma_{set}$) of said pitch angle ($\gamma_{set}$) of said blades (25) and a target value ($\omega^*_{set}$) of said angular velocity ($\omega$) of said hub (19);
xxiii) comparing a target value ($\gamma_{set}$) of said pitch angle ($\gamma$) with said ninth estimated value ($\gamma_{F/B}$) of said pitch angle ($\gamma$);
xxiv) constraining said hub (19) and said blades (25) by means of a drive element (20), so as to associate the value of said pitch angle ($\gamma$) with the relative angular position between said hub (19) and said drive element (20), with reference to said axis (B);
xxv) keeping said drive and hub elements (20, 19) angularly integral with each other about said axis (B) and in at least one first relative position between them, when the absolute value of an acceleration (a) of said output shaft (18) is less than a third threshold value (Ta) in use, so that said pitch angles ($\gamma$) assume respective first values ($\alpha$);
xxvi) allowing relative rotation between said drive element and hub (20, 19) between said first and second positions when the absolute value of said acceleration (a) reaches, in use, said third threshold value (Ta);
xxvii) computing a twenty-fourth value of an angular velocity gradient ($\Delta\omega_{set}$) of said hub (19) necessary to bring said pitch angle ($\gamma$) back to said target value ($\gamma_{SET}$);
xxviii) computing a twenty-fifth corrected target value ($\omega_{set}$) of said angular velocity ($\omega$) of said hub (19), based on said angular velocity gradient value ($\Delta\omega_{set}$) and said target value ($\omega^*_{set}$); and
xxix) operating said motor member (16) on the basis of the difference ($\omega_{err}$) between a measured value of said angular velocity ($\omega$) of said hub (19) and said corrected target value ($\omega_{set}$).

11. Computer product loadable into a control unit and adapted, when executed by said control unit, to implement the steps of a method according to any one of the preceding claims.

12. Rotor (10, 10') for an aircraft (1), comprising:

- a motor member (16), in particular an electric machine (30, 30'), comprising, in turn: a stator (14) and an output shaft (18) rotating about said stator (14);
- a hub (19) rotatable about said axis (B) and operatively connected with said output shaft (18) so as to be rotatable, in use, with an angular velocity ($\omega$) about said axis (B); and
- at least two blades (25) rotatable about said axis (B) integral with said hub (19) and rotatable about corresponding said second axes (D) of extension of the blades (25) transverse to said axis (B), so as to adjust the pitch angles ($\gamma$) of said blades (25) between a first value ($\alpha$) and a second value ($\beta$) different from each other;
**characterised in that** it comprises a control unit (17, 17') programmed to:

i) compute a third value of the torque ($\tau_{em}$) generated by said motor (16);

ii) compute (STEP 1, 2, 12) a fourth value of the torque ($\tau_{tr}$) required, in use, by said rotor (10, 10');

iii) computing (STEP 3, 13) a fifth value associated with the torque coefficient ($C_P$) and a sixth value of the thrust coefficient ($C_T$) of said rotor (10, 10'), also based on said fourth value associated with the torque ($\tau_{tr}$) required, in use, by said rotor (10, 10');

iv) comparing (STEP 4, 16) said fifth value with a seventh threshold value ($Th_P$), and said sixth value with an eighth threshold value ($Th_T$); and

v) estimating (STEP 5) a ninth value of said pitch angle ($\gamma$), based on the result of said step iv).

**13.** Rotor according to claim 12, **characterised in that** it further comprises:

- a drive element (20), which constrains said hub (19) and said blades (25) in such a way as to associate the value of said pitch angle ($\gamma$) with the relative angular position between said hub (19) and said drive element (20), with reference to said axis (B); and
- constraint means (23) configured to:

keep said drive and hub elements (20, 19) angularly integral with each other about said axis (B) and in at least one first relative position between them, when the absolute value of an acceleration (a) of said output shaft (18) is less, in use, than a third threshold value (Ta), so that said pitch angles ($\alpha$, $\beta$) assume respective first values ($\alpha$); and

allow relative rotation between said drive element and hub (20, 19) between said first and second positions when the absolute value of said acceleration (a) reaches, in use, said third threshold value (Ta);

**14.** Helicopter (1) comprising:

- a main rotor (4) adapted to provide the lift necessary for the support and the thrust necessary for the movement of the helicopter (1) itself;
- an anti-torque tail rotor (10, 10') made according to claim 12 or 13 to control the yaw angle of the helicopter itself.

**15.** Helicopter according to claim 14, **characterised in that** it comprises:

- a first sensor (50) adapted to detect the wind speed w;
- a second sensor (51) adapted to detect the outside air temperature (OAT);
- a third sensor (52) adapted to detect the altitude (ALT) of said helicopter (1) itself; and
- a fourth sensor (53) adapted to detect the rotation speed ($\omega$) of said hub (19) about said axis (B) and generate a corresponding signal ($\omega_{F/B}$) associated with said rotation speed ($\omega$);

said first, second, third and fourth sensors (50, 51, 52, 53) being operatively connected to said control unit (17, 17').

FIG. 1

EP 4 768 387 A1

FIG. 2

FIG. 3

# FIG. 4

STEP 7 → $v_{dc}$ acquisition

STEP 6 → DC bus current acquisition

STEP 9

$\omega_{F/B}$ → STEP 10 Conversion efficiency Computation (based on motor efficiency model)

$i_{dc}$ → Motor input power computation ← STEP 8 · 100 · 17

$P_e$

$\eta, (\omega_{tr})$ → / ($P_e$) ← Motor output power computation ← STEP 10bis

$P_m, (\omega_{tr})$

STEP 11 → Rotor parameters acquisition (e.g. inertia, drag, size..) → $J, B, \emptyset..$ → Rotor torque Computation. (based on rotor dynamic model) ← STEP 1,2,12 · $\dot{\omega}_{tr}$

$\tau_{tr}, (\omega_{tr}, \emptyset)$

STEP 15

OAT,ALT → Air density computation (based on air data model) → $\rho_{air}$ → Rotor coefficients computation ← $w$ ← Wind speed acquisition ← STEP 14

STEP 3,13

STEP 14

$C_P, C_T$

$\gamma_{F/B}=\beta$ ← $N$ ← Coefficients vs thresholds comparison → $Y$ → $\gamma_{F/B}=\alpha$

$C_P, C_T \geq Th_P, Th_T?$

STEP 4,16

STEP 5

EP 4 768 387 A1

20

# FIG. 5

STEP 18 — Angular speed acquisition

$\omega_{F/B}$

STEP 20

STEP 19 — Motor phase current acquisition

$ia_{F/B}, ib_{F/B}, ic_{F/B}$

Direct + quadrature current computation

STEP 8

$\int \omega_{tr}$

100

17'

$i_d, i_q, (\omega_{tr})$

STEP 21 — Motor parameters acquisition (e.g. n° of pair poles, magnetic flux..)

$n_p, \psi_{pm}$

Motor torque computation (based on motor dynamic model)

STEP 22

$\tau_{em}, (\omega_{tr})$

STEP 11 — Rotor parameters acquisition (e.g. inertia, drag, size..)

$J, B, \emptyset..$

Rotor torque Computation. (based on rotor dynamic model)

STEP 1,2,12

$\dot{\omega}_{tr}$

$\tau_{tr}, (\omega_{tr,} \emptyset)$

STEP 3,13

STEP 15 — Air density computation (based on air data model)

OAT,ALT

STEP 14

$\rho_{air}$

Rotor coefficients computation

$w$

Wind speed acquisition

STEP 14

$C_P, C_T$

$N$

$\gamma_{F/B} = \beta$

Coefficients vs thresholds comparison

$Y$

$\gamma_{F/B} = \alpha$

$C_P, C_T \geq Th_P, Th_T?$

STEP 4,16

STEP 5

EP 4 768 387 A1

**EUROPEAN SEARCH REPORT**

Application Number

EP 24 42 5068

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/100154 A1 (WAVEFRONT TECHNOLOGY PTY LTD [AU]; ANDERSON BRIAN [AU]) 27 October 2005 (2005-10-27) * abstract; claim 15; figure 1 * | 1-15 | INV. B64C11/30 B64D45/00 B64C27/78 |
| A | US 12 077 278 B1 (DURANLEAU-HENDRICKX LOUIS [CA] ET AL) 3 September 2024 (2024-09-03) * See in particular steps 404 and 410; column 3, line 66 - column 13, line 23; figures 1-6 * | 1-15 | ADD. B64C27/82 |
| A | US 2024/083574 A1 (UCHIDA KENTA [JP] ET AL) 14 March 2024 (2024-03-14) * paragraph [0033] - paragraph [0041]; figures 1-6 * | 1-15 | |

TECHNICAL FIELDS
SEARCHED     (IPC)

B64C
B64D

The present search report has been drawn up for all claims

| Place of search | Date of completion of the search | Examiner |
|---|---|---|
| Munich | 16 May 2025 | Lambert, Brice |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 42 5068

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | | Publication date | Patent family member(s) | | Publication date |
|---|---|---|---|---|---|
| WO 2005100154 | A1 | 27-10-2005 | NONE | | |
| US 12077278 | B1 | 03-09-2024 | EP | 4455000 A1 | 30-10-2024 |
| | | | US | 12077278 B1 | 03-09-2024 |
| US 2024083574 | A1 | 14-03-2024 | CN | 117699003 A | 15-03-2024 |
| | | | JP | 2024039175 A | 22-03-2024 |
| | | | US | 2024083574 A1 | 14-03-2024 |

**REFERENCES CITED IN THE DESCRIPTION**

**Patent documents cited in the description**

- EP 3501983 A

- EP 23220515